# EUROPEAN PATENT APPLICATION

(11) **EP 3 553 721 A1**
(43) Date of publication of application: **16.10.2019**
(21) Application number: 19168719.3
(22) Date of filing: 11.04.2019
(51) Int. Cl.: G06Q 20/20, G06Q 20/24, G06Q 20/38

(54) **CLOUD-BASED POINT-OF-SALE SYSTEM**

(30) Priority: 11.04.2018 US 201862655964 P
(71) Applicant: 4361423 Canada Inc., Westmount, Québec H3Z 1C3 (CA)
(72) Inventor: MCCANN, Daniel, Regina, SK S4V 2V3 (CA)
(74) Representative: Grünecker Patent- und Rechtsanwälte PartG mbB

(57) **Abstract**

Cloud-based point-of-sale systems and methods for effecting commercial transactions are provided. According to one system and method, a point-of-sale terminal is provided for capturing credit card information and transmitting the captured information to a central cloud point-of-sale server for processing a commercial transaction. The central cloud point-of-sale server processes the credit card information and returns a transaction notification to a point-of-sale system.

## Description

### Related U.S. Application Data

Provisional application No. 62/655,964, filed on April 11, 2018.

### FIELD OF THE INVENTION

The subject matter described herein relates generally to cloud-based point-of-sale systems and methods.

### BACKGROUND OF THE INVENTION

Prior art point-of-sale (POS) systems typically include a local or networked server along with one or more connected devices. There may be a keyboard for entering data, a cash drawer, credit/debit card reader, pin pad, and a receipt printer. Many companies also utilize various types of barcode scanners to input information quicker. There may also be a checkout scale, device reader and customer display.

Additionally, some POS systems utilize touchscreens for a more streamlined experience. Mobile and wireless technology allows for devices like tablets and smartphones to be used as a cost-effective option for businesses with limited resources.

These hardware components are used in conjunction with POS software, which will store information and allow it to be managed within a database. Within a software database, there are a multitude of functions that can be performed to manage many aspects of operations. These functions include credit card processing, cash-drawer management for cash sales, receipt printing, inventory tracking, barcode scanning, managing employee time clocks and reporting and analytics.

One standard function of a POS system is credit card processing. Credit card processing is defined as using an electronic system to move money from a customer's bank (issuing bank) into a merchant's bank (acquiring bank) as payment for goods and/or services. A payment processor is required in order to facilitate this process of requesting, verifying, and then transferring funds.

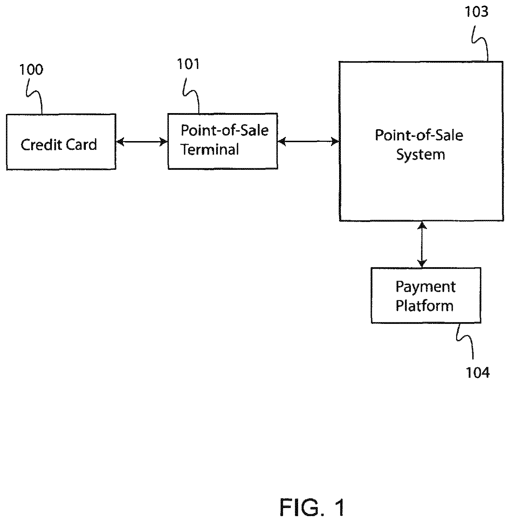

In these prior art POS systems, a Point-of-Sale (POS) terminal **101** captures information from a payment device. The payment device is a credit card **100** and the payment processor is located within the POS system **103**, illustrated in FIG. 1 - Prior Art. Once the credit card information has been captured by a Point-of-Sale (POS) terminal **101**, the payment processor located within the POS system **103** operatively connects to a payment platform **104**, also referred to as an acquirer, in order to determine if the credit card is authorized to be used. The POS terminal **101** can be any device that can capture credit card information that will be used to conduct a commercial transaction such as an intended sale. The POS terminal **101** may be operatively connected physically or wirelessly to the POS system **103**. As used herein, authorized means that the credit card is being used by an authorized user having sufficient credit associated with the card.

The complexity of internal management of credit card processing includes managing and storage of credit card information along with internal software and hardware set up. Additionally, there are data security concerns relating to the processing and/or storage of credit card information by the POS system **103**. In these systems, POS terminals **101** need to be securely connected to the POS system **103** and the POS system **103** needs to be securely connected to the payment platform **104** so that the credit card information can pass through the POS system **103**. By having the credit card information being passed through the POS system **103**, however, creates an opportunity for that information to be exposed and stolen.

Thus, there is a need for more efficient and effective credit card processing in conjunction with a POS System.

### OBJECTS OF THE INVENTION

An object of the present invention is the removal of the POS terminal from the local POS system. Rather, the POS terminal communicates with a central cloud POS server for processing commercial transactions.

### SUMMARY OF THE INVENTION

The present invention is directed toward a more efficient and secure a cloud-based POS system that includes credit card processing through a cloud-based POS server and not through the POS system. Specifically, the present invention is directed towards a system and method that provides a credit card information to a central cloud POS server which is remotely located from of the POS system. The central cloud POS server will process the credit card information and return a notification of an approved or declined transaction to the POS system.

### DESCRIPTION OF FIGURES

FIG. 1 is a block diagram of a prior art system including a Point-of-Sale (POS) terminal **101** operatively connected to a POS system **103**, and the POS system is operatively connected to a payment platform **104**.
FIG. 2 is a block diagram of an aspect of a cloud-based POS system of the present invention. A POS terminal **201** includes credit card information acquisition functionality but does not provide the acquired credit card information to the POS system **203** for payment processing.
FIG. 3 is a block diagram of an aspect of the present invention of a mobile POS system having two POS terminals, POS terminal A **301** and POS terminal B **311**; a terminal identifier is associated with each POS terminal utilized by the POS system **303**.
FIG. 4 is a block diagram of an aspect of a cloud-based POS system of the present invention. In this embodiment, the POS terminal **401** connects to the payment platform **404** for payment processing and transaction notification.
FIG. 5 is a block diagram of an aspect of a cloud-based POS system of the present invention. In this embodiment a device reader **501** captures the credit card information, the device reader **501** is operatively connected to a computer **502** and the computer **502** connects to the payment platform **504** for payment processing.

### DETAIL DESCRIPTION OF THE INVENTION

To the accomplishment of the foregoing and related ends, the disclosed aspects will hereinafter be described in conjunction with the appended drawings. Reference will now be described to various aspects, one or more examples of which are illustrated in the accompanying drawings. Each example is provided by way of explanation, and not limitation of the aspects. The disclosed aspects are intended to illustrate and not limit the ways in which the principles of various aspects may be employed and include all such aspects and their equivalents. It will be apparent to those skilled in the art that variations can be made in the described aspects without departing from the scope of the inventions.

The present invention is directed toward a more efficient and more secure cloud-based point-of-sale system that processes a commercial transaction using a credit card through a cloud-based service and not through the POS system. Specifically, the present invention is directed toward a POS terminal that provides transaction information related to a credit card sale to a central cloud POS server which is located remotely from the POS system. The central cloud POS server processes the transaction information and returns a transaction notification indicating an approved or declined transaction to the POS system and the POS terminal. The credit card information is not retained in the POS system eliminating the need for encryption software for storage of such information.

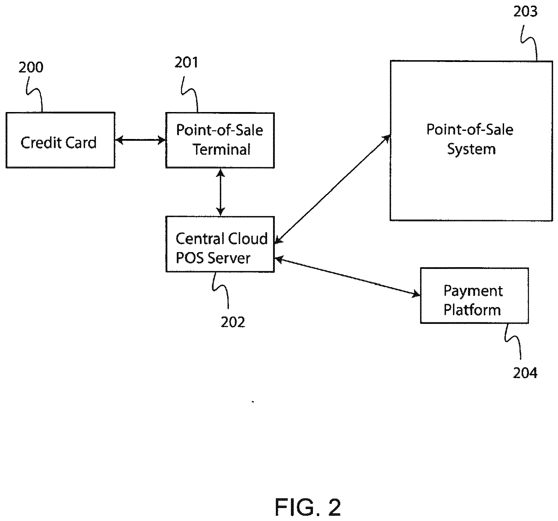

As shown in Figure 2, in one embodiment of the present invention, a POS terminal **201** includes credit card information acquisition functionality but does not provide the acquired credit card information to the POS system **203** for payment processing. The POS terminal **201** communicates with a central cloud POS server **202** which includes credit card payment processing functionality. The POS terminal **201** typically includes a device reader for capturing information from a credit card, a processor for encrypting the captured credit card information and a controller for transmitting the captured credit card information.

In this embodiment, each credit card sale transaction is assigned a unique identifier. This unique identifier is used to track the credit card transaction during its progression from the POS terminal **201** to the central cloud POS server **202** and back to the POS terminal **201**.

In one embodiment of the present invention, the POS terminal **201** continually monitors the central cloud POS server **202** for a response regarding a pending transaction. Once the POS terminal **201** identifies a notification associated with one of its pending transactions it will retrieve the notification. The POS system **203** may also monitor the central cloud POS server **202** for a response regarding a pending transaction associated with one of several POS terminals and retrieve related notifications.

In an additional embodiment of the present invention, the POS terminal **201** monitors the central cloud POS server **202** for a limited amount of time after sending a specific transaction to the central cloud POS server **202**. By limiting the monitoring of the central cloud POS server **202**, the POS terminal **201** only maintains a connection with the central cloud POS server **202** for limited amount of time thus reducing the amount of bandwidth required for the monitoring of the server.

In an additional embodiment of the present invention, the central cloud POS server **202** pushes a notification to the POS terminal **201** and/or POS system **203** once a determination has been made regarding the transaction.

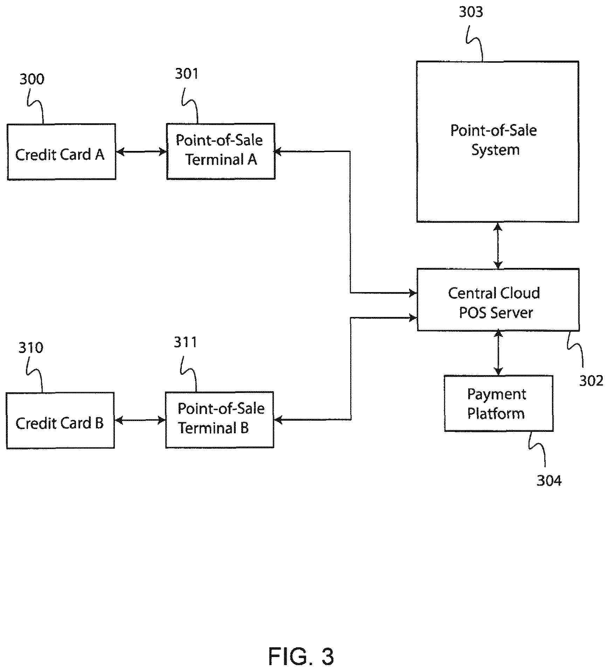

As illustrated in Figure 3, in an additional embodiment of the present invention, a terminal identifier is associated with each POS terminal utilized by the POS system **303**. It is fairly common for a POS system to have multiple POS terminals by which to transact business. In order to prevent the errant transmissions between the terminals, the terminals will be synced with the central cloud POS server **302** and each terminals' unique terminal identifier will be included within the transmission to the central cloud POS server **302** such so that the transmission of data between the terminals and the central cloud POS server **302** may be provided to the proper terminal.

By way of example, a mobile POS system having two POS terminals, POS terminal A **301** and POS terminal B **311**, all of which are handheld tablet computers, such as an iPad™, is illustrated in Figure 3. The POS system **303** communicates with the central cloud POS server **302** and establishes the terminal identifiers for POS terminal A **301** and POS terminal B **311**. POS terminal A **301** is being utilized to process a sale of a five-dollar item by a credit card. The credit card information is captured by POS terminal A **301** and then provided directly to the central cloud POS server **302**, along with the terminal identifier for POS terminal A **301** and a transaction identifier for the transaction. The credit card information is not retained or stored by POS terminal A **301** or the POS system **303**. The transmission of the credit card information to the central cloud POS server **302** may be made over a secured communication network, such as secure socket layer SSL.

The central cloud POS server **302** processes the credit card information to determine if the credit card is authorized to be utilized. By authorized to be utilized it is meant that the person presenting the credit card is that person and or the credit card has a sufficient balance for that sale. Once the credit card has been processed, a notification as to whether the sale is approved or declined will be either made available to POS terminal A **301** and the POS system **303** by way of one of the above-mentioned methods of providing the notification to the terminal.

POS terminal B **311** may be monitoring the central cloud POS server **302** as set out above. However, it will not receive a response relating to POS terminal A's **301** five-dollar sale due to that transaction being associated with POS terminal A **301**. Thus, while the POS system may receive notifications relating to sales communications originating from both POS terminal A **301** and POS terminal B **311**, POS terminal A **301** POS terminal B **311** only receive notifications that it originated and not the other terminal.

In this example, two terminals were included. This is illustrative. Those skilled in the art will recognize that the use of multiple terminals is within the scope of the invention. Some of the advantages of the present invention include better credit card security due to the credit card information not being processed or stored in the individual POS terminal or POS system **303**. Further with the reduction of the number computer systems, including the POS system **303**, that come in contact with the credit card information, the opportunities for a data breach is reduced and the POS system **303** set up and installation is more efficient as it does not require extensive security and encryption software. Further, as the credit card information does not pass to the POS system **303**, there is no requirement for a connection between the Payment Platform **304** and the POS system **303**. As such, the present invention does not require Payment Card Industry (PCI) compliance as the POS system **303** does not process the credit card payments.

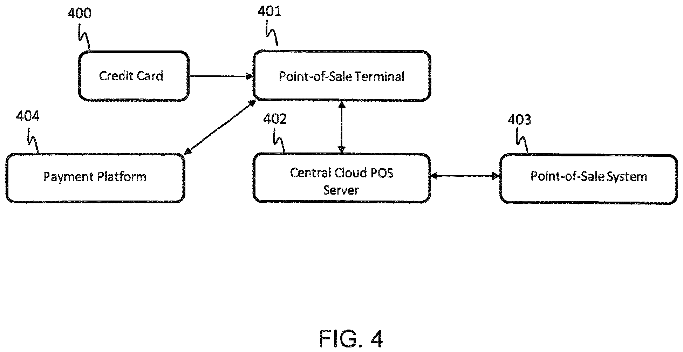

As illustrated in Figure 4, in an additional embodiment of the present invention, a POS terminal **401** includes credit card information acquisition functionality but does not provide that information to the POS system for payment processing. The POS terminal **401** operatively communicates with a cloud based central cloud POS server **402** which includes credit card payment processing functionality. In this embodiment, the POS terminal **401** connects to the payment platform **404** for payment processing and transaction notification.

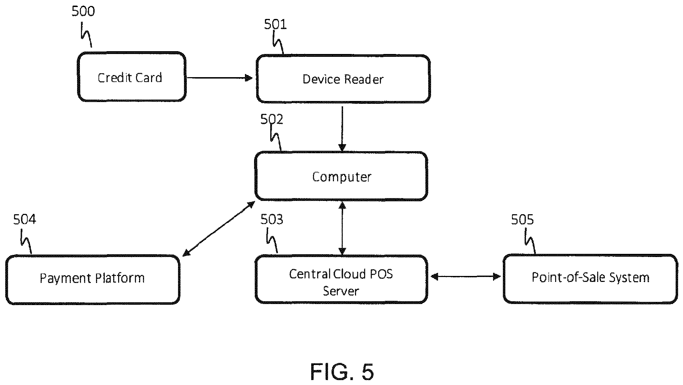

As illustrated in Figure 5, in an additional embodiment of the present invention, a device reader **501** captures the credit card information and includes and a processor for encrypting the captured credit card information and a controller transmitting the captured credit card information. The device reader **501** includes credit card information acquisition functionality but does not provide that information to the POS system **505** for payment processing. The device reader **501** is operatively connected to a computer **502** such as a laptop computer, desktop computer, handheld tablet computer or mobile personal communication device. The computer **502** operatively communicates with a central cloud POS server **503** which includes credit card payment processing functionality. In this embodiment, the computer **502** connects to the payment platform **504** for payment processing and transaction notification.

## Claims

1. A cloud-based point-of-sale system for effecting a commercial transaction, said system comprising:
a central cloud point-of-sale server for processing the commercial transaction;
a point-of-sale system operatively connected to the central cloud point-of-sale server, said point-of-sale system is located remotely from the central cloud point-of-sale server;
a payment platform operatively connected to the central cloud point-of-sale server;
a point-of-sale terminal for capturing information from a payment device, said point-of-sale terminal is operatively connected to the central cloud point-of-sale server;
wherein the point-of-sale terminal transmits the captured payment device information to said central cloud point-of-sale server, the central cloud point-of-sale server processes the commercial transaction and transmits a transaction notification to the point-of-sale system and the point-of-sale terminal.

2. A system according to claim 1, wherein said payment device is a device selected from the group consisting of a magnetic stripe card, chip card, EMV card, contactless card, NFC device, mobile payment device or any combination thereof.

3. A system according to claim 1, wherein said point-of-sale terminal includes a device reader for capturing the payment device information, a processor for encrypting the captured payment device information and a controller for transmitting the encrypted payment device information.

4. A system according to claim 1, wherein said point-of-sale terminal includes a terminal identifier associated with each POS terminal.

5. A system according to claim 1, wherein said point-of-sale terminal does not provide the payment device information to the point-of-sale system for payment processing.

6. A method for effecting a commercial transaction, said method comprising:
a point-of-sale terminal captures information from a payment device;
said point-of-sale terminal transmits the captured payment device information to a central cloud point-of-sale server;
a payment platform operatively connected to the central cloud point-of-sale server processes the commercial transaction and transmits a transaction notification to the point-of-sale terminal;
wherein the point-of-sale terminal transmits the captured payment device information to said central cloud point-of-sale server, the central cloud point-of-sale server processes the commercial transaction and transmits a transaction notification to a point-of-sale system and the point-of-sale terminal.

7. A method according to claim 6, wherein said payment device is a device selected from the group consisting of a magnetic stripe card, chip card, EMV card, contactless card, NFC device, mobile payment device or any combination thereof.

8. A method according to claim 6, wherein said point-of-sale terminal includes a device reader for capturing the payment device information, a processor for encrypting the captured payment device information and a controller for transmitting the encrypted payment device information.

9. A method according to claim 6, wherein said point-of-sale terminal includes a terminal identifier is associated with each point-of-sale terminal.

10. A method according to claim 6, wherein said point-of-sale terminal does not provide the payment device information to the point-of-sale system for payment processing.
